# EUROPÄISCHE PATENTSCHRIFT

(11) **EP 3 019 889 B1**
(45) Veröffentlichungstag und Bekanntmachung des Hinweises auf die Patenterteilung: **15.01.2020**
(21) Anmeldenummer: 14733976.6
(22) Anmeldetag: 27.05.2014
(51) Int. Cl.: G01S 13/90, G01S 13/06, G01S 13/58, G01S 7/41

(54) **SCHIFFSDETEKTION IN INTERFEROMETRIE-RADARDATEN**
SHIP DETECTION IN INTERFEROMETRY RADAR DATA
DÉTECTION DE BATEAUX À PARTIR DE DONNÉES RADAR INTERFÉROMÉTRIQUES

(30) Priorität: 12.07.2013 DE 102013107402
(43) Veröffentlichungstag der Anmeldung: 18.05.2016
(73) Patentinhaber: Deutsches Zentrum für Luft- und Raumfahrt e.V., 51147 Köln (DE)
(72) Erfinder: SUCHANDT, Steffen, 81373 München (DE); RUNGE, Hartmut, 81377 München (DE)
(74) Vertreter: Rösler, Frank
(86) Internationale Anmeldenummer: PCT/DE2014/100180
(87) Internationale Veröffentlichungsnummer: WO 2015/003686

(56) Entgegenhaltungen:
- US-B2- 6 952 178
- BARBER B C: "Multichannel ATI-SAR with application to the adaptive Doppler filtering of ocean swell waves", IEE PROCEEDINGS: RADAR, SONAR & NAVIGATION, INSTITUTION OF ELECTRICAL ENGINEERS, GB, Bd. 150, Nr. 6, 1. Dezember 2003 (2003-12-01), Seiten 403-410, XP006024346, ISSN: 1350-2395, DOI: 10.1049/IP-RSN:20030935
- STEPHAN BRUSCH ET AL: "Ship Surveillance With TerraSAR-X", IEEE TRANSACTIONS ON GEOSCIENCE AND REMOTE SENSING, IEEE SERVICE CENTER, PISCATAWAY, NJ, US, Bd. 49, Nr. 3, 1. März 2011 (2011-03-01), Seiten 1092-1103, XP011348490, ISSN: 0196-2892, DOI: 10.1109/TGRS.2010.2071879 in der Anmeldung erwähnt

## Beschreibung

Die Erfindung betrifft ein Verfahren und eine Vorrichtung zur Ermittlung je einer Position und einer Fahrtrichtung für ein oder mehrere im Wasser fahrende Wasserfahrzeuge (Schiffe /Boote) aus Interferometrie-Radardaten, in denen die Wasserfahrzeuge und die Wasserfahrzeuge umgebende Wasseroberflächen abgebildet sind.

Zur Überwachung des Schiffsverkehrs wird heute von den Küstenwachen mehrerer Länder auf Daten von Radar-Satelliten, wie beispielsweise dem deutschen TerraSAR-X, zurückgegriffen. Dabei steht die Abkürzung "SAR" für engl. "Synthetic Aperture Radar". Diese Radar-Satelliten sind in der Lage, unabhängig von Tageszeit und Wetterbedingungen Bildaufnahmen großer Gebiete der Erdoberfläche zu machen. Es sind weiterhin automatische Datenauswertesysteme, sog. "SAR Ship Detection Prozessoren" bekannt, die es ermöglichen, in den erfassten Radar-Daten Schiffe zu erkennen und deren Koordinaten, Größe sowie Fahrtrichtung und Fahrtgeschwindigkeit zu ermitteln.

Kleine Schiffe (Boote) lassen sich mit heute bekannten Verfahren in den Radar-Bildern oft nicht erkennen, da sie sich zu wenig vom Hintergrundsignal, das durch die Rückstreuung der Mikrowellen von der aufgerauten Meeresoberfläche hervorgerufen wird, unterscheiden. Eine besondere Art dieser kleinen Boote sind so genannte "Speed Boats", die oft auch für illegale Zwecke eingesetzt werden. Sie sind sehr klein, häufig aus Kunststoff gefertigt und erreichen durch die Ausstattung mit starken Motoren oft hohe Fahrtgeschwindigkeiten von 50 bis 90 km/h. Infolge dessen sind sie in Radar-Bildern von Satelliten bislang gar nicht oder nur schwer zu detektieren.

Im einfachsten Fall wird heute ein Wasserfahrzeug in einem SAR Amplituden-Bild gefunden, indem die hohe Rückstreuung des Objektes als helle Struktur im SAR Amplituden-Bild detektiert wird. Weist es jedoch aufgrund seiner Größe und seines Aufbaus nur eine kleine Radar-Signatur auf, wie diese für die vorstehend genannten Boote der Fall ist, die in der Regel aufgrund der Bewegung der Boote zudem auch defokussiert ist, so ist es in den Amplituden-Bildern mit den bekannten Auswerteverfahren nur schwer oder gar nicht detektierbar. Hinzu kommt, dass die Wasseroberfläche eine starke Radar-Rückstreuung erzeugen kann und sich deshalb kleine Boote im Radarbild nicht genügend vom Hintergrund abheben.

Andere bekannte Verfahren zielen darauf ab, im Amplitudenbild der Radar-Daten die Signatur der sog. Kelvin-Wake, einer v-förmigen sich hinter einem Schiff auf der Wasseroberfläche ausbildenden Wellenstruktur oder die Kiellinie direkt hinter einem Schiff zu detektieren. Bei den letztgenannten Verfahren muss also nicht mehr unbedingt das Schiff selbst erkannt werden, sondern die Wellenstruktur, die es auf der Wasseroberfläche hinterlässt und im Radarbild sichtbar wird.

Des Weiteren werden zur Schiffsdetektion SAR-Mehrkanalverfahren angewandt, die auf der sog. Along-Track Interferometrie (ATI) basieren. Dabei nimmt das Radar-Interferometer in sehr kurzem zeitlichen Abstand (bspw. 1.0 ms) zwei separate SAR-Bilder desselben Gebietes auf. Die Differenzphase der Aufnahmen ist annähernd proportional zu den Geschwindigkeiten der abgebildeten fahrenden Schiffe. Damit eignet sich die Differenzphase grundsätzlich sowohl zur Detektion bewegter (fahrender) Schiffe, als auch zur Geschwindigkeitsmessung der Schiffe. Die Leistungsfähigkeit dieses Verfahrens hängt ebenfalls von der Stärke der Signatur der betrachteten Wasserfahrzeuge in den Radarbildern ab und ist insbesondere für kleinere Boote stark limitiert.

Aus der US 6,952,178 ist ein Verfahren bekannt, mit dem in SAR-Daten Punktziele detektiert werden können, und dann analysiert wird, wie sich die detektierten Punktziele in einer Sequenz von Multi-Look Bildern bewegen. Weiterhin sind im Stand der Technik zur vorliegenden Thematik folgende Artikel bekannt:
- Stephan Brusch, et al. "Ship Surveillance With TerraSAR-X", IEEE Transactions on Geoscience and Remote Sensing, März 2011,
- Yu, Xiangzhen et al. "Simulation of Along-Track Interferometric Synthetic Aperture Radar Images of Kelvin Wakes", ASPAR 2009
- Shemer, L. et al. "Simulation of ship wakes image by an along-track interferometric SAR", Int. J. Remote Sensing, vol. 17, no 18, pp 3577-3597, 1996.
- Barber B C "Multichannel ATI-SAR with application to the adaptive Doppler filtering of ocean swell waves", IEE PROCEEDINGS: RADAR, SONAR & NAVIGATION, Vol. 150, No. 6, December 2003, pp 403-410.

Die Signatur von Booten bzw. kleinen Schiffen hebt sich in SAR-Bildern oft nicht signifikant genug vom Hintergrund ab, um detektierbar zu sein, sowohl im einzelnen SAR-Bild als auch in Mehrkanalaufnahmen nach dem ATI-Prinzip. Ebenso sind die durch die Bootsbewegung hervorgerufenen typischen Störungen der Wasseroberfläche in Gestalt bestimmter Wellenformationen und sog. Ship Wakes im SAR-Bild oft nicht deutlich genug ausgeprägt, um sie für die Erkennung zu verwenden. Dies trifft ebenso auf interferometrische SAR-Daten bislang verwendeter ATI-fähiger Satelliten zu.

Die Aufgabe der Erfindung ist es ein Verfahren und eine Vorrichtung anzugeben, die eine zuverlässigere Erkennung von fahrenden Wasserfahrzeugen, insbesondere kleinen Schiffen bzw. kleinen Booten, in Radar-Interferometrie-Daten ermöglichen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein verfahrensgemäßer Aspekt der Aufgabe ist mit einem Verfahren zur Ermittlung je einer Position und einer Fahrtrichtung für ein oder mehrere im Wasser fahrende Wasserfahrzeuge aus Interferometrie-Radardaten, insbesondere aus Interferometrie-Radardaten, die nach dem ATI-Verfahren ermittelt wurden, in denen die Wasserfahrzeuge und die Wasserfahrzeuge umgebende Wasseroberflächen abgebildet sind, gelöst. Das vorgeschlagene Verfahren umfasst folgende Schritte.

In einem ersten Schritt erfolgt ein Bereitstellen der Radardaten als 2D-Interferogrammdaten INT1(x,y). Die Radardaten werden vorteilhaft von einem Radar-Interferometer an Bord eines oder mehrer Luftfahrzeuge oder Satelliten erfasst. Die 2D-Interferogrammdaten INT1(x,y) umfassen für jedes Datenpixel (Pixel) x,y zumindest einen Amplitudenwert und einen Wert einer Differenzphase. Die Anzahl und Anordnung der Pixel des 2D-Datenfeldes ergibt sich typischerweise durch das zur Aufnahme der 2D-Interferogrammdaten INT1(x,y) verwendete Interferometer oder durch einen nachgeschalteten SAR-Interferometrie-Prozess. Die senkrecht zueinender orientierten Bildachsen der 2D-Interferogrammdaten INT1(x,y) sind bevorzugt identisch mit der Flugrichtung des Radar-Interferometers bzw. einer dazu senkrecht orientieren Blickrichtung (Aufnahmerichtung) des Radar-Interferometers.

In einem zweiten Schritt erfolgt ein Segmentieren der 2D-Interferogrammdaten INT1(x,y) zur Ermittlung von segmentierten 2D-Interferogrammdaten INT2(x,y), wobei die segmentierten 2D-Interferogrammdaten INT2(x,y) nur diejenigen 2D-Datenbereiche Bₙ der 2D-Interferogrammdaten INT1(x,y) umfassen, die jeweils ein zusammenhängendes Streifenmuster, sogenanntes "Fringe-Pattern", wiedergeben, mit n = 1, 2, ... Das Segmentieren zur Erzeugung der 2D-Datenbereiche Bₙ kann mittels verschiedener Verfahren, bspw. wie nachstehend beschrieben, erfolgen.

Das sogenannte "Fringe-Pattern" ergibt sich vorliegend durch die Interferogramm-Bildung. Die vorliegend betrachteten "Fringe-Pattern" eines 2D-Datenbereiche Bₙ zeigen Streifenmuster mit typischerweise annähernd parallel verlaufenden Streifen, so dass unter Richtung/Ausrichtung der "Fringe-Pattern" vorliegend insbesondere die Richtung der parallel verlaufenden Streifen relativ zu einer Vorzugsrichtung bedeutet. Vorliegend ist die Vorzugsrichtung bevorzugt eine Bildachse der 2D-Interferogrammdaten INT1(x,y). Nach diesem zweiten Schritt liegen somit segmentierte 2D-Interferogrammdaten INT2(x,y) vor, die eine Untermenge der 2D-Interferogrammdaten INT1(x,y) sind und die u.a. eine besonders hohe Phasen-Kohärenz aufweisen.

Da die segmentierten 2D-Interferogrammdaten INT2(x,y) teilweise Datenpixel (x,y) enthalten können, die nur aufgrund von Fehlern, bspw. von Messfehlern, dem zweiten 2D-Datenbereich Bₙ zugeordnet wurden, werden in einer Weiterbildung nach dem zweiten Schritt bevorzugt ein oder mehrere morphologischer Bilddatenfilter (bspw. Clusterung, Schrumpfen und Wachsen, Erosion und Dilation, etc.) angewandt, um diese Datenfehler zu beseitigen oder zumindest weitestgehend zu reduzieren.

In einer Weiterbildung des Verfahrens werden nach dem zweiten Schritt (und bevorzugt vor dem nachstehend beschriebenen dritten Schritt) all jene 2D-Datenbereiche Bₙ ausgeschieden, deren Bereichsgröße kleiner als ein vorgegebener Grenzwert G2 ist. Die Bereichsgröße kann bspw. in Form der Gesamtzahl der Pixel angegeben werden, die der jeweilige 2D-Datenbereich Bₙ umfasst.

In einem dritten Schritt erfolgt ein Ermitteln einer Kontur (und damit der Form) für jeden der 2D-Datenbereiche Bₙ. Entsprechende Konturermittlungsalgorithmen sind im Stand der Technik hinreichend bekannt.

In einem vierten Schritt erfolgt ein Ermitteln eines Schwerpunktes für jeden der 2D-Datenbereiche Bₙ, wobei weiterhin für jeden der 2D-Datenbereiche Bₙ die Position eines Wasserfahrzeugs auf Basis des Schwerpunktes ermittelt wird. Der Schwerpunkt eines 2D-Datenbereichs Bₙ lässt sich bspw. leicht auf Basis der geometrischen Anordnung der zum 2D-Datenbereich Bₙ gehörenden Bildpixel (x,y) ermitteln.

Im einfachsten Fall wird als Position des Wasserfahrzeugs im jeweiligen 2D-Datenbereich Bₙ der ermittelte Schwerpunkt angenommen. Dies kann nach Erfahrungen der Erfinder jedoch zu Positionsungenauigkeiten führen, so dass die derart ermittelte Position korrigiert werden muss, um eine verbesserte Positionsgenauigkeit zu erreichen.

Vorteilhaft erfolgt aufgrund der ermittelten Kontur des jeweiligen 2D-Datenbereichs Bₙ eine Korrektur der zuerst als Schwerpunkt bestimmten Position eines Wasserfahrzeugs mit einer ersten Genauigkeit hin zu einer Position mit verbesserter Genauigkeit durch Verschieben der zuerst bestimmten Position entlang der in den nachfolgenden Schritten bestimmten Fahrtrichtung des Wasserfahrzeugs auf das nächstliegende Kontursegment des jeweiligen 2D-Datenbereichs Bₙ.

In einem fünften Schritt erfolgt ein Ermitteln einer geometrischen Ausrichtung des in den Daten jedes 2D-Datenbereichs Bᵢ abgebildeten Streifenmusters, bevorzugt relativ zu einer Bildachse der 2D-Interferogrammdaten INT1(x,y). In einem sechsten Schritt erfolgt für jeden der 2D-Datenbereiche Bₙ abhängig von der ermittelten Ausrichtung des Streifenmusters und der ermittelten Form der Kontur des jeweiligen 2D-Datenbereichs Bₙ ein Ermitteln der Fahrtrichtung des jeweiligen Wasserfahrzeugs.

Das vorgeschlagene Verfahren ermöglicht insbesondere das Ermitteln der Position und der Fahrtrichtung von kleinen Schiffen bzw. kleinen Booten auf Basis von 2D-Interferogrammdaten INT1(x,y), ohne dass diese Schiffe bzw. Boote selbst eine Signatur in den 2D-Interferogrammdaten INT1(x,y) erzeugen.

Eine Weiterbildung des Verfahrens zeichnet sich dadurch aus, dass die Segmentierung im zweiten Schritt mittels eines Mustererkennungsalgorithmus erfolgt, der die Streifenmuster in den 2D-Interferogrammdaten INT1(x,y) erkennt.

Eine dazu alternative Weiterbildung zeichnet sich dadurch aus, dass die Segmentierung im zweiten Schritt folgende Schritte umfasst.

In einem Schritt erfolgt ein Ermitteln von Leistungsspektren Lᵢ für jeden einer Anzahl N1 erster 2D-Datenbereiche B1ᵢ in den 2D-Interferogrammdaten INT1(x,y), mit i = 1, ..., N1. In einer bevorzugten Weiterbildung des Verfahrens ist die Anzahl N1 der ersten 2D-Datenbereiche B1ᵢ gleich einer Gesamtpixelanzahl der 2D-Interferogrammdaten INT1(x,y), so dass für jedes Pixel (xᵢ,yᵢ) der 2D-Interferogrammdaten INT1(x,y) ein lokales Leistungsspektrum Lᵢ = L(xᵢ,yᵢ) ermittelt wird. In einer Ausgestaltung des Verfahrens umfassen die ersten 2D-Datenbereiche B1ᵢ = B1(xᵢ,yᵢ) 2D-Interferogrammdaten INT1(x,y) mit einer vorgegebenen Nachbarschaftsbeziehung zu dem Pixel (xᵢ,yᵢ). So kann ein einem Pixel (xᵢ,yᵢ) zugeordneter 2D-Datenbereich B1ᵢ = B1(xᵢ,yᵢ) bspw. die direkten Nachbarpixel, und/oder die übernächsten Nachbarpixel etc. umfassen. Weiterhin können über vorgegebenen Nachbarschaftsbeziehungen auch alle 2D-Interferogrammdaten INT1(x,y) dem 2D-Datenbereich B1ᵢ = B1(xᵢ,yᵢ) zugeordnet werden, die eine vom Bezugspixel (xᵢ,yᵢ) abhängige Relation erfüllen, bspw. deren "Entfernung" vom Bezugspixel kleiner als eine vorgegebener Grenzwert ist.

In einem weiteren Schritt erfolgt ein Ermitteln einer Maximal-Amplitude Amaxᵢ je ermitteltem Leistungsspektrum Lᵢ. Damit liegt für jeden 2D-Datenbereich B1ᵢ = B1(xᵢ,yᵢ) ein ermitteltes Leistungsspektrum vor. Hierzu sind Verfahren zur Ermittlung eines Leistungsspektrums aus Interferogrammdaten dem Fachmann bekannt, so dass sich weitere Ausführungen hierzu erübrigen.

In einem weiteren Schritt erfolgt das Segmentieren der 2D-Interferogrammdaten INT1(x,y) zur Ermittlung von segmentierten 2D-Interferogrammdaten INT2(x,y), wobei die segmentierten 2D-Interferogrammdaten INT2(x,y) nur diejenigen 2D-Interferogrammdaten INT1(x,y) umfassen, die ersten 2D-Datenbereichen B1ₖ zugeordnet sind, für die die ermittelten Maximal-Amplituden Amaxᵢ der Leistungsspektren Lᵢ jeweils größer als ein vorgegebener Schwellwert G1 sind, mit k = 1, ..., N2. Für N2 gilt: N2 ≤ N1, wobei N2 typischerweise erheblich kleiner als N1 ist.

In einem weiteren Schritt erfolgt in den segmentierten 2D-Interferogrammdaten INT2(x,y) ein Ermitteln zusammenhängender 2D-Datenbereiche Bₙ mit n = 1, 2, 3, .... Unter dem Begriff "zusammenhängender Datenbereich" wird dabei vorliegend ein Datenbereich mit jeweils aneinandergrenzenden Datenpixeln (x,y), oder anders ausgedrückt, ein Datenbereich verstanden, bei dem es nicht möglich ist, ihn in zwei disjunkte, nichtleere, offene Teildatenmengen aufzuteilen. Nach diesem Schritt wird das Verfahren mit dem vorbeschriebenen dritten Schritt fortgesetzt.

In einer vorteilhaften Weiterbildung wird die in den 2D-Interferogrammdaten INT1(x,y) ermittelte Position des Wasserfahrzeugs in ein absolutes Ortskoordinatensystem (bspw. Erdkoordinaten, GPS-Koordinaten etc.) transformiert und zusammen mit der Fahrtrichtung des Wasserfahrzeugs ausgegeben.

Eine Weiterbildung des Verfahrens zeichnet sich dadurch aus, dass das Ermitteln der Maximal-Amplituden Amaxᵢ eine Median-Filterung der Leistungsspektren Lᵢ zur Erzeugung gefilterter lokaler Leistungsspektren Lᵢ' umfasst. Weiterhin bevorzugt werden die Maximal-Amplituden Amaxᵢ jeweils für ein Differenzspektrum von lokalem Leistungsspektrum Lᵢ und gefiltertem lokalen Leistungsspektrum Lᵢ' ermittelt.

Eine Weiterbildung des Verfahrens zeichnet sich dadurch aus, dass der Schwellwert G1 abhängig von den ermittelten Maximal-Amplituden Amaxᵢ adaptiv bestimmt wird und/oder der Schwellwert G1 als Summe von Mittelwert und Standardabweichung aller Maximal-Amplituden Amaxᵢ ermittelt wird. Beides führt zu einer Verbesserung der Datenqualität der segmentierten 2D-Interferogrammdaten INT2(x,y).

Eine Weiterbildung des Verfahrens zeichnet sich dadurch aus, dass die Interferometrie-Radardaten mit einem Radar-Interferometer aufgenommen werden, wobei eine Zeitdifferenz von zwei aufeinanderfolgender Radar-Aufnahmen bei Verwendung eines im X-Band arbeitenden Radar-Interferometers im Bereich von 0,01s bis 0,2s, insbesondere von 0,02s bis 0,05s oder von 0,04 s bis 0,1s liegt.

Eine Weiterbildung des Verfahrens zeichnet sich dadurch aus, dass die Interferometrie-Radardaten mittels eines oder mehrerer Radarsatelliten, insbesondere einer Kombination aus den Radarsatelliten TerraSAR-X und TanDEM-X, oder mittels eines Luftfahrzeug-getragenen Radar-Interferometers aufgenommen werden. Dabei kommt bevorzugt ein sogenanntes "Along-Track Interferometric Synthetic Aperture Radar" zum Einsatz.

Das vorgeschlagene Verfahren ist geeignet, die durch die Wasseroberflächen-Anregung des Bootes in den 2D-Interferogrammdaten INT1(x,y) erzeugten typischen Streifenmuster (Fringe-Pattern) zu detektieren und so das Wasserfahrzeug an hand seiner Beeinflussung der Wasseroberfläche zu erfassen. Es sei betont, dass es sich bei dem detektierten "Fringe-Pattern" um ein größeres, zusammenhängendes Gebiet handelt und nicht um die hinter Schiffen entstehende, oft auch in den Radar-Bildern zu sehende, V-förmige sog. Kelvin-Wake.

Ein Vorteil des Verfahrens besteht darin, dass auch kleinere Schiffe bzw. Boote detektiert werden können, die selbst nicht unbedingt im SAR Bild erkennbar sind.

Ein weiterer Vorteil des Verfahrens besteht darin, dass mit der Detektion der durch die Anregung der Wasseroberfläche durch das Boot erzeugten Phasen-Muster automatisch die Originalposition des bewegten Objekts bestimmt werden kann. Wegen der Schiffsbewegung und der daraus resultierenden Verschiebung des empfangenen Doppler-Spektrums erfolgt die Abbildung der eigentlichen Schiffssignatur im Radarbild und in den 2D-Interferogrammdaten INT1(x,y) bis zu mehrere km entfernt vom Originalort des Schiffs. Durch diesen sog. "Train Off The Track" Effekt können Verfahren, die die Schiffe in den Radar-Bildern detektieren, nicht ohne Weiteres die genaue tatsächliche Position des Schiffs angeben.

Ein weiterer Vorteil besteht darin, dass sich zudem aus Orientierung und Form des charakteristischen "Fringe-Pattern" in den 2D-Datenbereichen Bₙ die Fahrtrichtung des Schiffes ableiten lässt. Mit existierenden Methoden ist dies nur möglich, wenn entweder der Schiffsrumpf groß genug ist, um seine Orientierung zu bestimmen und die Radar-Signatur stark genug ist, um mittels Signalanalyse die Geschwindigkeitskomponenten zu schätzen oder wenn im Radarbild die Kelvin Wake sichtbar ist. Mehrere bzw. sogar alle diese drei Bedingungen sind in vielen Fällen jedoch nicht erfüllt.

Es wird vermutet, dass die Phasen-Muster (Fringe-Pattern) durch Anregung der Wasseroberfläche durch das fahrende Boot hervorgerufen werden. Dies ist gestützt auf die Beobachtungen, dass sie im Interferogramm erstens am Originalort des Objekts, d.h. versetzt von der sichtbaren Bootssignatur und zweitens größtenteils hinter der das Bootsheck tangierenden und quer zur Fahrtrichtung verlaufende (gedachte) Linien auftreten. In diesem Bereich ist das Hervorrufen der Phasenmuster durch die Bootssignatur selbst ausgeschlossen, da diese versetzt und vor dieser Linie zu finden ist. Die Auslenkung der Wasseroberfläche durch die angeregten Wellen ist in weiter vom Boot entfernten Bereichen zwar sehr klein und somit im einzelnen SAR-Bild nicht sichtbar, die Bewegung aber durch die extrem hohe Empfindlichkeit des Interferometers nachweisbar.

Vorteilhaft werden für das Verfahren Radar-Daten eines SAR Along-Track-Interferometers mit sehr großer Baseline und damit sehr hoher Empfindlichkeit für Bewegungen der Wasser-Oberfläche genutzt. Ein solcher möglicher Sensor ist die Formation aus dem deutschen TerraSAR-X und dem TanDEM-X Satelliten. Hier umkreist der zweite Satellit den ersten in einer helixförmigen Bahn, wodurch sich sowohl eine Across-Track als auch eine Along-Track Baseline ergibt. Die erstere ermöglich eine Messempfindlichkeit auf Topographie, letztere eine Messempfindlichkeit auf Bewegungen am Boden und damit deren Detektion und Messung. Im vorliegenden Fall wird die Detektion gelöst durch:
Die Verwendung eines SAR-Interferometers mit sehr langer Along-Track Baseline und der daraus resultierenden extrem hohen Empfindlichkeit auf Bewegungen in Radar-Blickrichtung. Dadurch können Bewegungen der Wasseroberfläche, wie von Wellen hervorgerufen, gemessen werden. Die durch die Bewegung eines Wasserfahrzeugs verursachte Dynamik der Wasseroberfläche in einem größeren Bereich unmittelbar rückwärtig und seitlich zur Fahrtrichtung wird im ATI-Phasenbild (= 2D-Interferogrammdaten INT1(x,y)) anhand eines charakteristischen Streifenmusters (Fringe-Pattern) sichtbar. Durch die starke Anregung der Wasseroberfläche entsteht hier gleichzeitig ein Bereich höherer Kohärenz, während die übrige Wasseroberfläche infolge des relativ großen zeitlichen Abstandes der zwei Einzelaufnahmen und der Anregung durch den Wind im Radar-Interferogramm meist dekorreliert ist.

Das vorgeschlagene Verfahren nutzt die interferometrischen Radardaten INT1(x,y) zur Detektion von Wasserfahrzeugen in Radar-Interferometriedaten an hand von durch die Anregung der Wasseroberfläche durch das Boot induzierten Phasen-Mustern bspw. in Along-Track Interferometrie (ATI) Radar Daten. Als Messvorrichtung wird eine Kombination aus einem hoch empfindlichen SAR Along-Track Interferometer und einem speziell zugeschnittenen Signalanalyse-Algorithmus angewandt.

Die Antennen des Interferometers müssen in Flugrichtung soweit separiert sein, dass die Zeitdifferenz zwischen den Aufnahmen in der Größenordnung von etwa 0,01s bis 0,1s liegt. Das ist z. B. bei zwei Satelliten gegeben, die im Abstand von ca. 300 m bis 800 m mit einer Geschwindigkeit von 7.600 m/s hintereinander herfliegen. Im Fall eines Flugzeuggetragenen SAR, das sich z. B. mit 100 m/s fortbewegt, muss die Separierung 4 m bis 10m betragen. Bei zu kleinem Abstand zwischen den Antennen verliert das Interferometer so an Empfindlichkeit, dass die Anregung der Wasseroberfläche nicht mehr stark genug abgebildet wird, um sie zu detektieren.

Des weiteren muss die Bildauflösung der Radardaten hoch genug sein, damit die zur Boots-Detektion benutzten Fringe-Pattern ausreichend abgetastet sind. Die typische Wiederholrate der Linien eines solchen "Fringe-Pattern" liegt bei 1,75 pro 100 m Bildbereich, was eine Bildauflösung von besser 30 m erfordert. Alternativ lässt sich der Bereich auf dem Wasser auch mit Systemen mit kurzer ATI Baseline detektieren, wenn die Kohärenz zwischen den Kanälen ausgewertet wird. Äquivalent zu den Phasen-Mustern im 2D-Interferogramm ist hier hinter dem Wasserfahrzeug ein Bereich von erhöhter Kohärenz sichtbar.

Die Aufgabe der Erfindung ist weiterhin gelöst durch ein Computersystem, mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Zudem wird die Aufgabe der Erfindung gelöst durch ein digitales Speichermedium mit elektronisch aus lesbaren Steuersignalen, wobei die Steuersignale so mit einem programmierbaren Computersystem zusammenwirken können, dass ein Verfahren, wie vorstehend beschrieben, ausgeführt wird.

Ferner wird die Aufgabe der Erfindung gelöst durch ein Computer-Programm-Produkt mit auf einem maschinenlesbaren Träger gespeicherten Programmcode zur Durchführung des Verfahrens, wie vorstehend beschrieben, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Ein vorrichtungsgemäßer Aspekt der Aufgabe wird von einer Vorrichtung zur Ermittlung je einer Position und einer Fahrtrichtung für ein oder mehrere im Wasser fahrende Wasserfahrzeuge aus Interferometrie-Radardaten, in denen die Wasserfahrzeuge und die Wasserfahrzeuge umgebende Wasseroberflächen abgebildet sind, gelöst.

Die vorgeschlagene Vorrichtung umfasst gemäß einer Ausführungsform ein Mittel zum Bereitstellen der Radardaten als 2D-Interferogrammdaten INT1(x,y); ein Mittel zum Segmentieren der 2D-Interferogrammdaten INT1(x,y) zur Ermittlung von segmentierten 2D-Interferogrammdaten INT2(x,y), wobei die segmentierten 2D-Interferogrammdaten INT2(x,y) nur 2D-Datenbereiche Bₙ der 2D-Interferogrammdaten INT1(x,y) umfassen, die jeweils ein zusammenhängendes Streifenmuster, sogenanntes Fringe-Pattern, wiedergeben, mit n = 1, 2, ...; ein Mittel zum Ermitteln einer Kontur für jeden der 2D-Datenbereiche Bₙ; ein Mittel zum Ermitteln eines geometrischen Schwerpunktes für jeden der 2D-Datenbereiche Bₙ, wobei weiterhin für jeden der 2D-Datenbereiche Bₙ die Position eines Wasserfahrzeugs auf Basis des Schwerpunktes ermittelt wird; ein Mittel zum Ermitteln einer geometrischen Ausrichtung des in den Daten jedes 2D-Datenbereichs Bₙ abgebildeten Streifenmusters; und ein Mittel zum Ermitteln der Fahrtrichtung des jeweiligen Wasserfahrzeugs für jeden der 2D-Datenbereiche Bₙ abhängig von der ermittelten Ausrichtung des Streifenmusters und der ermittelten Form der Kontur des jeweiligen 2D-Datenbereichs Bₙ.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen schematischen Ablauf des vorgeschlagenen Verfahrens gemäß einer Ausführungsform,
- Fig. 2: einen schematischen Aufbau einer vorgeschlagenen Vorrichtung gemäß einer Ausführungsform,
- Fig. 3: ein Amplitudenbild der 2D-Interferogrammdaten INT1(x,y)
- Fig. 4: ein Phasenbild der 2D-Interferogrammdaten INT1(x,y)
- Fig. 5: ein Phasenbild mit Fringe-Pattern von durch die Boote angeregten Regionen der Wasseroberfläche,
- Fig. 6: ein Bild mit signifikanten relativen Peak-Höhen im lokalen Leistungsspektrum Lᵢ.
- Fig. 7: eine Überlagerung aus einem maskiertem Phasenbild und GPS-Positionen zweier zum Zeitpunkt der Satellitenaufnahme in betreffendem Gebiet fahrender Speed-Boote,
- Fig. 8: eine zughörige Segmentierungsmaske (nach morphologischer Filterung und Größenfilterung),
- Fig. 9: eine Kontur der Fringe-Pattern, wobei hier automatisch bestimmt wurde, ob sich das jeweilige Fringe-Pattern mit einem sich vom Radar-Sensor weg bewegenden Boot (weiß) oder mit einem sich darauf zu bewegendem Boot (schwarz) assoziiert ist, und
- Fig. 10: ein Fringe-Pattern eines 2D-Datenbereiches Bₙ mit Schwerpunkt (Punkt 1) und ermittelter Schiffsposition (Punkt 2).

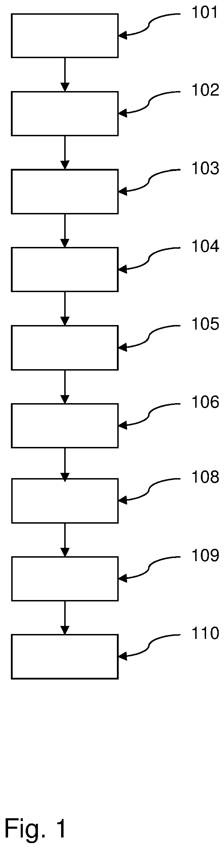

**Fig. 1** zeigt einen schematischer Ablauf des vorgeschlagenen Verfahrens zur Ermittlung je einer Position und einer Fahrtrichtung für ein oder mehrere im Wasser fahrende Wasserfahrzeuge aus Interferometrie-Radardaten, in denen die Wasserfahrzeuge und die Wasserfahrzeuge umgebende Wasseroberflächen abgebildet sind, in einer Ausführungsform.

Die Aufnahme der interferometrischen Radardaten erfolgt mit einer SAR Sensor-Formation mit großer effektiver Along-Track Baseline von typisch 150 bis 400m für den Satellitenfall, z. B. mit der Tandem-X Radar-Satelliten Formation. Die erfassten Radar-Daten werden anschließend mittels eines SAR-Interferometrie-Prozessors verarbeitet. Dieser übernimmt die üblichen, zur Berechnung von Interferogrammdaten aus SAR-Mehrkanaldaten erforderlichen Schritte, u.a. die Bildfokussierung, Co-Registrierung und letztlich, die Interferogrammbildung, d.h. die Ermittlung der 2D-Interferogrammdaten INT1(x,y).

Für das vorgeschlagene Verfahren erfolgt in einem Schritt **101** ein Bereitstellen der Radardaten als 2D-Interferogrammdaten INT1(x,y). In einem Schritt **102** erfolgt ein Ermitteln von Leistungsspektren Lᵢ für jeden einer Anzahl N1 erster 2D-Datenbereiche B1ᵢ in den 2D-Interferogrammdaten INT1(x,y), mit i = 1, ..., N1. Die Ermittlung der lokalen Leistungsspektren Lᵢ erfolgt vorliegend mittels Nutzung eines gleitenden Analysefensters. Die Größe des Fensters wird empirisch bestimmt.

In einem Schritt **103** erfolgt ein Ermitteln einer Maximal-Amplitude Amaxᵢ je ermitteltem Leistungsspektrum Lᵢ. Das Auffinden des sich am stärksten vom übrigen (Rausch-) Spektrum unterscheidenden, d.h. signifikantesten Peaks (Maximal-Amplitude Amaxᵢ) indiziert das lokale Vorhandensein einer einzelnen Fringe-Frequenz (anstelle breitbandigem Rauschen) wie sie mit dem Fringe-Pattern einer durch ein Boot angeregten Wasseroberfläche assoziiert ist. Zum Auffinden der Maximal-Amplitude Amaxᵢ wird die Differenz aus einer mittels Median-Filterung geglätteten Version des Spektrums und dessen Original, d.h. eine relative Peak-Höhe verwandt. Die ermittelte Maximal-Amplitude Amaxᵢ des lokalen Spektrums kann in einer Bildkarte von gleicher Größe wie die als 2D-Interferogrammdaten INT1(x,y) vermerkt werden. Aufgrund starken Rauschens kann die Bildkarte der relativen Peak-Höhen vor der weiteren Verarbeitung mit einem Box-Filter empirisch bestimmter Größe geglättet werden.

In einem Schritt **104** erfolgt ein Segmentieren der 2D-Interferogrammdaten INT1(x,y) bzw. der Bildkarte (siehe zuvor) zur Ermittlung von segmentierten 2D-Interferogrammdaten INT2(x,y), wobei die segmentierten 2D-Interferogrammdaten INT2(x,y) nur diejenigen 2D-Interferogrammdaten INT1(x,y) bzw. Bildkartendaten umfassen, die ersten 2D-Datenbereichen B1ₖ zugeordnet sind, für die die ermittelten Maximal-Amplituden Amaxᵢ der Leistungsspektren Lᵢ jeweils größer als ein vorgegebener Schwellwert G1 sind, mit k = 1, ..., N2. Die segmentierten 2D-Interferogrammdaten INT2(x,y) umfassen somit diejenigen Daten der 2D-Interferogrammdaten INT1(x,y), die Fringe-Pattern, d.h. eine hohe Phasenkohärenz aufweisen. Der Schwellwert G1 wird vorteilhaft als Summe robuster Schätzungen von Mittelwert und (empirisch skalierter) Standardabweichung der Amplituden aller ermittelten Leistungsspektren Lᵢ bestimmt.

In einem Schritt **105** erfolgt ein Ermitteln zusammenhängender 2D-Datenbereiche Bₙ mit n = 1, 2, 3, ... in den segmentierten 2D-Interferogrammdaten INT2(x,y). Zur Verbesserung der Datenqualität werden anschließend morphologische bspw. Erosions-/Dilations-Bildbearbeitungsfilter auf die segmentierten 2D-Interferogrammdaten INT2(x,y) zum Erhalt konsistenter detektierter Bereiche angewandt. Weiterhin werden vorteilhaft kleinere (bspw. Datenbereiche mit einer Gesamtpixelzahl die kleiner als ein vorgegebener Schwellwert ist), mit "Falschalarmen" assoziierte Bereiche der segmentierten 2D-Interferogrammdaten INT2(x,y) ausgeblendet.

In einem Schritt **106** erfolgt ein Ermitteln einer Kontur für jeden der 2D-Datenbereiche Bₙ. Damit ist die geometrische Form der jeweiligen der zweiten 2D-Datenbereiche Bₙ explizit bekannt.

In einem Schritt **108** erfolgt ein Ermitteln eines geometrischen Schwerpunktes für jeden der 2D-Datenbereiche Bₙ, wobei weiterhin die Position eines Wasserfahrzeugs in den 2D-Datenbereichen Bₙ auf Basis des jeweils ermittelten Schwerpunktes bestimmt wird. Beispielsweise erfolgt die Bestimmung der Position eines Wasserfahrzeugs zunächst durch Ermittlung des Schwerpunktes eines 2D-Datenbereiches Bₙ mit einer anschließenden Korrektur der Schwerpunktsposition durch Verschieben der Schwerpunktsposition entlang der anschließend bestimmten Fahrtrichtung auf das nächstliegende Kontursegment des jeweiligen 2D-DatenbereichsBₙ.

In einem Schritt 109 erfolgt ein Ermitteln einer geometrischen Ausrichtung eines in Daten jedes 2D-Datenbereichs Bₙ abgebildeten Streifenmusters, sogenanntes "Fringe-Pattern", (d.h. konkret die Ausrichtung der Streifen, wobei näherungsweise deren Parallelität unterstellt wird) relativ zu einer Bildachse der 2D-Interferogrammdaten INT1(x,y).

In einem Schritt **110** erfolgt für jeden der 2D-Datenbereiche Bₙ abhängig von deren jeweils ermittelten Ausrichtung des Streifenmusters, und der Kontur des jeweiligen 2D-Datenbereichs Bₙ ein Ermitteln der Fahrtrichtung des jeweiligen Wasserfahrzeugs relativ zum Koordinatensystem der 2D-Interferogrammdaten INT1(x,y)..

Das Ermitteln der Fahrtrichtung erfolgt durch Analyse der detektierten Konturform und der Orientierung der darin liegenden "Fringe-Pattern". Dabei wird zugrunde gelegt, dass sich die Form der 2D-Datenbereiche Bₙ in einer Richtung orthogonal zur tatsächlichen Fahrtrichtung des Wasserfahrzeugs entgegen der Fahrtrichtung verjüngt. Dies gibt Aufschluss darüber, ob das Wasserfahrzeug auf den Radarsensor zu oder davon weg fährt. Weiterhin wird zugrunde gelegt, dass die Ausrichtung der "Fringe-Pattern" der 2D-Datenbereiche Bₙ mit der Fahrtrichtung des Wasserfahrzeugs korreliert ist und daher eine Ermittlung eines Fahrtrichtungswinkels zulässt. Zur Schätzung der absoluten Fahrtrichtung wird diese Information mit der zuvor ermittelten Information zur Fahrtrichtung im letzten Unterpunkt genannten kombiniert.

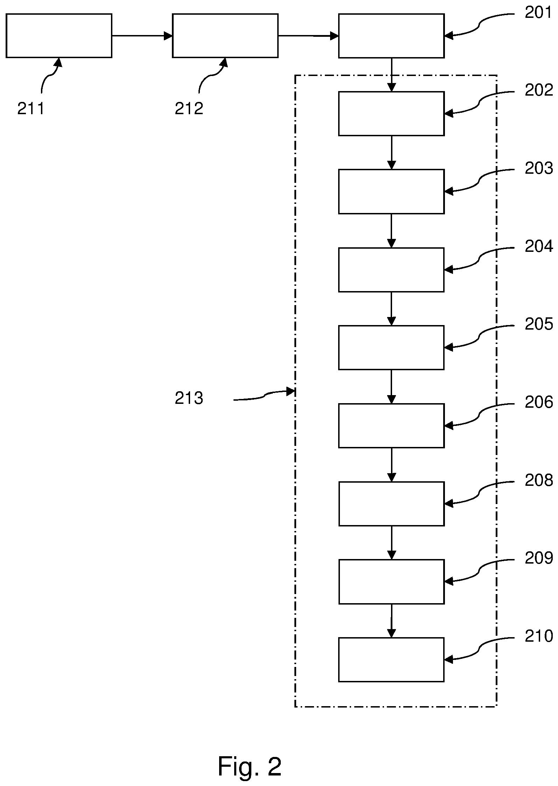

**Fig. 2** zeigt einen schematischen Aufbau einer vorgeschlagenen Vorrichtung zur Ermittlung je einer Position und einer Fahrtrichtung für ein oder mehrere im Wasser fahrende Wasserfahrzeuge aus Interferometrie-Radardaten, in denen die Wasserfahrzeuge und die Wasserfahrzeuge umgebende Wasseroberflächen abgebildet sind, gemäß einer Ausführungsform. Die Vorrichtung umfasst ein Mittel **201** zum Bereitstellen der Radardaten als 2D-Interferogrammdaten INT1(x,y), ein Mittel **202** zum Ermitteln von Leistungsspektren Lᵢ für jeden einer Anzahl N1 erster 2D-Datenbereiche B1ᵢ in den 2D-Interferogrammdaten INT1(x,y), mit i = 1, ..., N1, ein Mittel **203** zum Ermitteln einer Maximal-Amplitude Amaxᵢ je ermitteltem Leistungsspektrum Lᵢ, ein Mittel **204** zum Segmentieren der 2D-Interferogrammdaten INT1(x,y) zur Ermittlung von segmentierten 2D-Interferogrammdaten INT2(x,y), wobei die segmentierten 2D-Interferogrammdaten INT2(x,y) nur diejenigen 2D-Interferogrammdaten INT1(x,y) umfassen, die ersten 2D-Datenbereichen B1ₖ zugeordnet sind, für die die ermittelten Maximal-Amplituden Amaxᵢ der Leistungsspektren Lᵢ jeweils größer als ein vorgegebener Schwellwert G1 sind, mit k = 1, ..., N2, ein Mittel **205** zum Ermitteln zusammenhängender 2D-Datenbereiche Bₙ mit n = 1, 2, 3, in den segmentierten 2D-Interferogrammdaten INT2(x,y), ein Mittel **206** zum Ermitteln einer Kontur für jeden der 2D-Datenbereiche Bₙ, ein Mittel **208** zum Ermitteln eines geometrischen Schwerpunktes für jeden der 2D-Datenbereiche Bₙ, wobei weiterhin für jeden der 2D-Datenbereiche Bₙ die Position eines Wasserfahrzeugs auf Basis des Schwerpunktes ermittelt wird; ein Mittel **209** zum Ermitteln einer Ausrichtung von in Daten jedes 2D-Datenbereichs Bₙ abgebildeten Streifenmusters, sogenanntes "Fringe-Pattern", und ein Mittel **210,** mit dem für jeden der 2D-Datenbereiche Bₙ abhängig von deren Ausrichtung des Streifenmusters und der Kontur des jeweiligen 2D-Datenbereichs Bₙ die Fahrtrichtung des jeweiligen Wasserfahrzeugs ermittelt wird.

Das Bezugszeichen **211** kennzeichnet den Radar-Sensor, mit dem die Interferometrie-Radardaten erfasst werden. Die erfassten Interferometrie-Radardaten werden von einem Interferometrie-Prozessor **212** vorprozessiert. Der Interferometrie-Prozessor **212** ist mit dem ersten Mittel 201 verbunden. Das Bezugszeichen **213** kennzeichnet einen Schiffsdetektionsprozessor, der die Mittel **201** bis **210** umfasst.

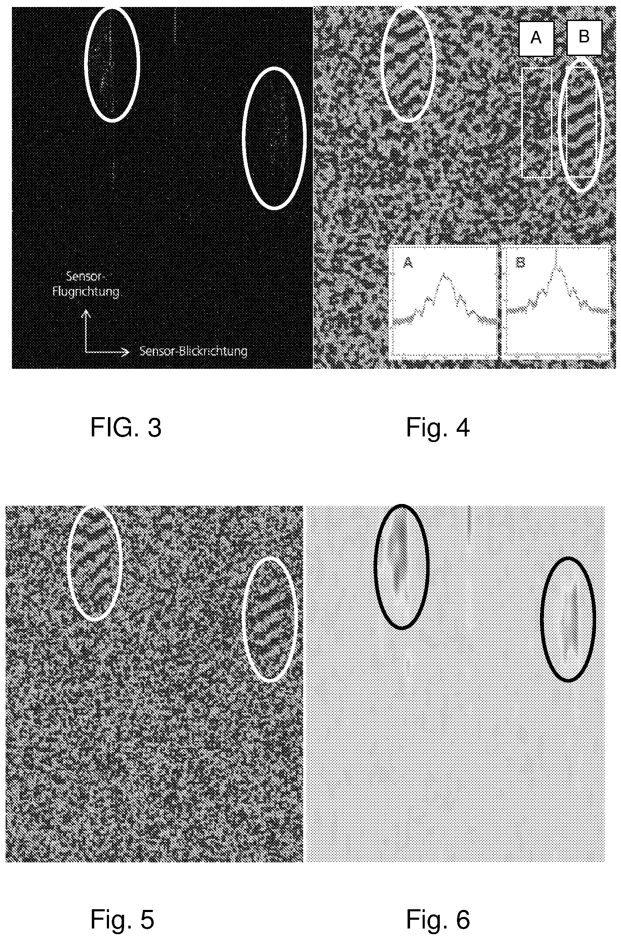

Ein Messbeispiel der von einem Radar-Sensor **211** ermittelten und mit dem Interferometrie Prozessor **212** zu 2D-Interferogrammdaten INT1(x,y) verarbeiteten Daten ist in **Fig. 3** bis **Fig. 10** gezeigt.

**Fig. 3** zeigt ein Amplitudenbild der 2D-Interferogrammdaten INT1(x,y) und **Fig. 4** zeigt ein Phasenbild der 2D-Interferogrammdaten INT1(x,y) jeweils eines Szenenausschnitts mit 1000 x 1200 Pixel der Ozeanoberfläche mit den Mustern, die durch zwei Speed-Boote hervorgerufen wurden. In **Fig. 4** sind zusätzlich für die angegebenen Bereiche **A** und **B** gültige Leistungsspektren dargestellt.

In einem Experiment hierzu wurden zwei Speed-Boote, die sich mit 58 km/h bzw. 42 km/h in annähernd diagonaler Richtung vom Sensor, der TanDEM-X Satelliten-Formation, weg bewegten aufgenommen. Aus den Aufnahmen des ersten und zweiten Empfangskanals wurden 2D-Interferogrammdaten INT1(x,y) gebildet, die in **Fig. 4** ausschnittsweise für den Bereich der Bootspositionen gezeigt sind. Hierin fallen im Wesentlichen zwei Bildbereiche mit regelmäßigem Phasenmuster auf. Die Positionen entsprechen den zwei größeren helleren Bereichen (jeweils mit einer weißen Ellipse markiert) im Amplitudenbild (Fig. 3). Diese, der Anregung der Wasseroberfläche durch das Boot zuzuschreibenden Phasen-Muster werden durch das vorgeschlagene Verfahren zunächst erkannt und weiter analysiert.

Das Erkennen der Phasen-Muster (Fringe Patterns) beruht in diesem Beispiel auf der lokalen Schätzung des Leistungsspektrums Lᵢ in einer begrenzten Umgebung eines jeden Pixels der 2D-Interferogrammdaten INT1(x,y) und dem Auffinden von mit den Fringe-Pattern (zweite 2D-Datenbereiche B2ₙ) assoziierten signifikanten spektralen Peaks (Amaxᵢ), wie in **Fig. 4** gezeigt. Der Beispiel-Bereich **A** (in **Fig.4** durch ein weißes Rechteck markiert) beinhaltet eine von bewegten Objekten unbeeinflusste Wasseroberfläche und zeigt daher kein Fringe-Pattern und demzufolge auch keinen sich signifikant vom lokalen Interferogrammspektrum unterscheidenden Peak (Amaxᵢ). Der Beispielbereich **B** in **Fig.4** (durch ein weißes Rechteck markiert) beinhaltet die von einem fahrenden Speed-Boot beeinflusste Wasseroberfläche und zeigt ein Fringe-Pattern (zweiter 2D-Datenbereiche B2ₙ) und daher auch einen signifikanten Peak (Amaxᵢ) im lokalen InterferogrammSpektrum.

Für die beiden Bereiche **A** und **B** wurde jeweils ein zugeordnetes Leistungsspektrum berechnet und in **Fig. 4** als Graph dargestellt. Das Spektrum von Phasenmuster **B**, das mit der Anregung der Wasseroberfläche durch eines der Boote assoziiert ist, zeigt einen deutlichen Peak. Der beispielhafte Bereich **A**, der nicht von diesen Wellen beeinflusst ist, zeigt keinen derart ausgeprägten Peak. Die Blickrichtung des Radar-Sensors ist in den Figuren von links nach rechts, die Flugrichtung von unten nach oben.

Die **Fig. 5** bis **Fig. 10** zeigen zur Veranschaulichung der Funktionsweise des vorgeschlagenen Verfahrens einige Zwischenergebnisse basierend auf den Ausgangsdaten von **Fig. 3** bzw. **Fig. 4****.**

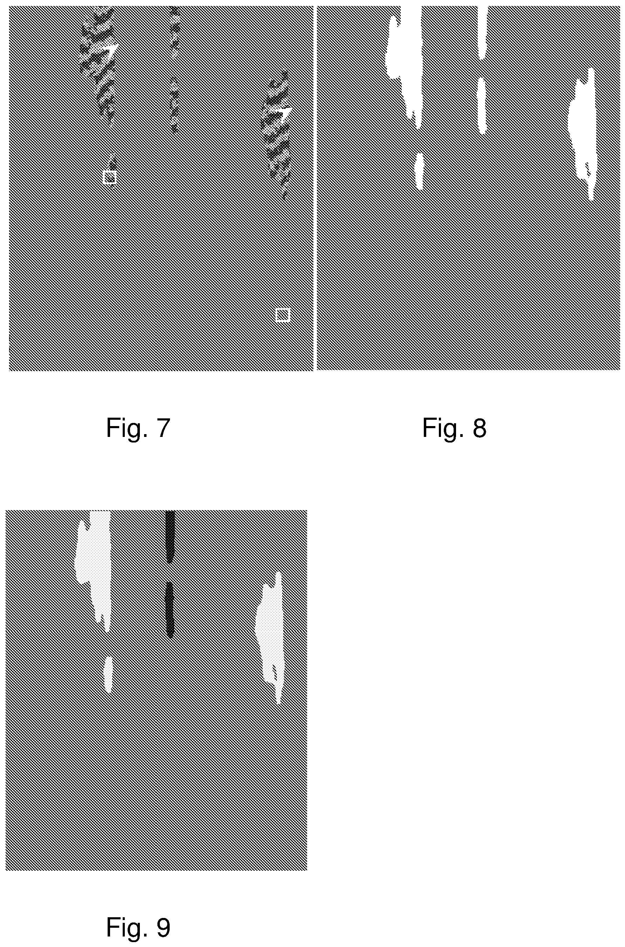

**Fig.** 5 zeigt ein Bild der Interferogrammphase mit Fringe-Pattern von durch fahrende Boote angeregten Regionen der Wasseroberfläche. **Fig. 6** zeigt das zugehörige Bild mit signifikantesten relativen Peak-Höhen im lokalen Leistungsspektrum. **Fig. 8** zeigt eine zughörige Segmentierungsmaske (nach morphologischer Filterung und Größenfilterung). **Fig. 7** zeigt eine Überlagerung aus maskiertem Phasenbild und GPS-Positionen zweier zum Zeitpunkt der Satellitenaufnahme in betreffendem Gebiet fahrender Speed-Boote.

In **Fig. 6** sind die Fringe-Pattern, welche im Phasen-Bild (**Fig.5**) zu sehen sind, deutlich von den übrigen Bereichen zu unterscheiden. Durch Anwendung eines Schwellwertes G1 und den erwähnten Bildbearbeitungsoperatoren auf diese Bildkarte werden die Fringe-Pattem (zweiter 2D-Datenbereiche B2ₙ) vorliegend als Regionen in einer Binärmaske (vgl. **Fig. 8**) kodiert. In dem maskierten Phasenbild (**Fig. 7**) sind Informationen über zwei in diesem Bereich befindliche Speedboote abgebildet. Die weißen Pfeile geben dabei die mittels GPS gemessenen tatsächlichen Positionen und tatsächlichen Fahrtrichtungen der Boote zum Zeitpunkt der Satellitenaufnahme an. Die weißen Rechtecke zeigen die Positionen, an die die Boots-Signaturen infolge der Dopplerverschiebung und der SAR-Prozessierung versetzt werden. Sie sind sowohl im SAR-Bild als auch im Interferogramm gar nicht oder nur sehr schwer sichtbar.

Die Orientierung der Fringes, d.h. der Streifenmuster, in den zweiten 2D-Datenbereichen B2ₙ korreliert mit der Fahrtrichtung der Boote und eignet sich daher zur Bestimmung derselben. Allerdings ist diese Information nicht hinreichend, da sich damit nur die anguläre Orientierung bestimmen lässt, jedoch nicht, ob sich ein Boot (entlang dieser Orientierung) vor oder zurück bewegt. Im vorgeschlagenen Verfahren wird dazu die Form (Kontur) der Fringe-Pattern, bzw. der mit ihnen assoziierten markierten Regionen in der Detektionsmaske genutzt. Die Ausdehnung der Fringe-Pattern in der (Radar-Sensor-) Flugrichtungs-Dimension verkleinert sich tendenziell entgegengesetzt zur Fahrtrichtung des Bootes. Die Richtung, in der diese Verjüngung verläuft, wird im Verfahren durch eine Analyse der räumlichen Verteilung aller Punkte eines zweiten 2D-Datenbereiches B2ₙ bestimmt. Das Ergebnis ist die Information, ob sich das Boot vom Radar-Sensor weg oder auf ihn zu bewegt hat

Für die Beispielszene ist dies in **Fig. 9** dargestellt. Es zeigt die Kontur der Fringe-Pattern, wobei hier über den vorbeschriebenen Algorithmus automatisch bestimmt wurde, ob sich das jeweilige Fringe-Pattern mit einem sich vom Radar-Sensor weg bewegenden Boot (weiß) oder mit einem sich darauf zu bewegendem Boot (schwarz) assoziiert ist.

Zum Vergleich sei nochmals auf **Fig. 7** verwiesen, in dem die maskierten Interferogramm-Phasen mit den GPS-Positionen der zwei Speed-Boote zum Aufnahmezeitpunkt dargestellt sind. Die mit den zwei Booten (Dreiecke) assoziierten detektierten Pattern in **Fig. 7** sind in **Fig. 9** mit der Farbe Weiß gekennzeichnet, indizieren also eine Fahrtrichtung nach rechts.

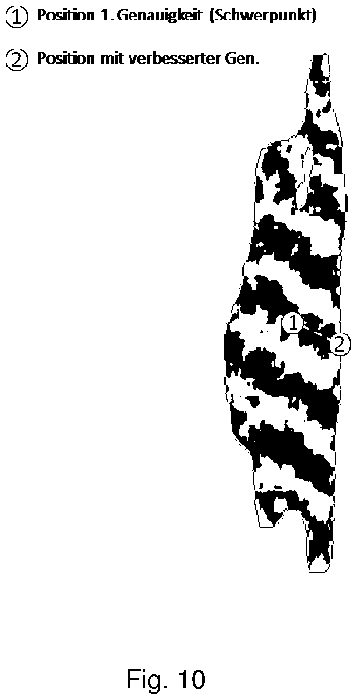

**Fig. 10** zeigt ein Fringe-Pattern eines 2D-Datenbereiches Bₙ mit einem ermittelten Schwerpunkt des 2D-Datenbereichs Bₙ (Punkt 1) und der daraus ermittelten Schiffsposition (Punkt 2) durch Verschieben der Schwerpunktsposition entlang der bestimmten Fahrtrichtung auf das nächstliegende Kontursegment des jeweiligen 2D-Datenbereichs Bₙ.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

## Patentansprüche

1. Verfahren zur Ermittlung je einer Position und einer Fahrtrichtung für ein oder mehrere im Wasser fahrende Wasserfahrzeuge aus Interferometrie-Radardaten, in denen die Wasserfahrzeuge und die Wasserfahrzeuge umgebende Wasseroberflächen abgebildet sind, umfassend folgende Schritte:
a. Bereitstellen (101) der Radardaten als 2D-Interferogrammdaten INT1(x,y);
b. Segmentieren (104) der 2D-Interferogrammdaten INT1(x,y) zur Ermittlung von segmentierten 2D-Interferogrammdaten INT2(x,y), wobei die segmentierten 2D-Interferogrammdaten INT2(x,y) nur diejenigen 2D-Datenbereiche Bₙ der 2D-Interferogrammdaten INT1(x,y) umfassen, die jeweils ein zusammenhängendes Streifenmuster, sogenanntes Fringe-Pattern, wiedergeben, mit n = 1, 2, ...;
c. Ermitteln (106) einer Kontur für jeden der 2D-Datenbereiche Bₙ;
d. Ermitteln (108) eines Schwerpunktes für jeden der 2D-Datenbereiche Bₙ, wobei weiterhin für jeden der 2D-Datenbereiche Bₙ die Position eines Wasserfahrzeugs auf Basis des Schwerpunktes ermittelt wird;
e. Ermitteln (109) einer geometrischen Ausrichtung des in den Daten jedes 2D-Datenbereichs Bₙ abgebildeten Streifenmusters; und
f. für jeden der 2D-Datenbereiche Bₙ abhängig von der ermittelten Ausrichtung des Streifenmusters und der ermittelten Kontur des jeweiligen 2D-Datenbereichs Bₙ Ermitteln (110) der Fahrtrichtung des jeweiligen Wasserfahrzeugs.

2. Verfahren nach Anspruch 1, bei dem die Segmentierung in Schritt b. mittels eines Mustererkennungsalgorithmus erfolgt, der die Streifenmuster in den 2D-Interferogrammdaten INT1(x,y) erkennt.

3. Verfahren nach Anspruch 1, bei dem die Segmentierung in Schritt b. folgende Schritte umfasst:
g. Ermitteln (102) von Leistungsspektren Lᵢ für jeden einer Anzahl N1 erster 2D-Datenbereiche B1ᵢ in den 2D-Interferogrammdaten INT1(x,y), mit i = 1, ..., N1,
h. Ermitteln (103) einer Maximal-Amplitude Amaxᵢ je ermitteltem Leistungsspektrum Lᵢ,
i. Segmentieren (104a) der 2D-Interferogrammdaten INT1(x,y) zur Ermittlung von segmentierten 2D-Interferogrammdaten INT2(x,y), wobei die segmentierten 2D-Interferogrammdaten INT2(x,y) nur diejenigen 2D-Interferogrammdaten INT1(x,y) umfassen, die ersten 2D-Datenbereichen B1ₖ zugeordnet sind, für die die ermittelten Maximal-Amplituden Amaxᵢ der Leistungsspektren Lᵢ jeweils größer als ein vorgegebener Schwellwert G1 sind, mit k = 1, ..., N2, und
j. in den segmentierten 2D-Interferogrammdaten INT2(x,y) Ermitteln (105) zusammenhängender 2D-Datenbereiche Bₙ mit n = 1, 2, 3, ...;

4. Verfahren nach Anspruch 3,
bei dem die Anzahl N der ersten 2D-Datenbereiche B1ᵢ gleich einer Gesamtpixelanzahl der 2D-Interferogrammdaten INT1(x,y) ist, so dass für jedes Pixel (xᵢ,yᵢ) der 2D-Interferogrammdaten INT1(x,y) ein lokales Leistungsspektrum Lᵢ = L(xᵢ,yᵢ) ermittelt wird.

5. Verfahren nach Anspruch 4,
bei dem die ersten 2D-Datenbereiche B1ᵢ = B1(xᵢ,yᵢ) nur 2D-Interferogrammdaten INT1(x,y) umfassen, die eine vorgegebene Nachbarschaftsbeziehung zu dem jeweiligen Bezugspixel (xᵢ,yᵢ) umfassen.

6. Verfahren nach einem der Ansprüche 3 bis 5,
bei dem das Ermitteln der Maximal-Amplituden Amaxᵢ eine Median-Filterung der Leistungsspektren Lᵢ zur Erzeugung gefilterter lokaler Leistungsspektren Lᵢ' umfasst, und die Maximal-Amplituden Amaxᵢ jeweils für ein Differenzspektrum von lokalem Leistungsspektrum Lᵢ und gefiltertem lokalen Leistungsspektrum Lᵢ' ermittelt werden.

7. Verfahren nach einem der Ansprüche 3 bis 6,
bei dem der Schwellwert G1 abhängig von den ermittelten Maximal-Amplituden Amaxᵢ adaptiv bestimmt wird, oder bei dem der Schwellwert G1 als Summe von Mittelwert und Standardabweichung aller Maximal-Amplituden Amaxᵢ bestimmt wird.

8. Verfahren nach einem der Ansprüche 3 bis 7,
bei dem nach Schritt b. all jene 2D-Datenbereiche Bₙ ausgeschieden werden, deren Bereichsgröße kleiner als ein vorgegebener Grenzwert G2 ist.

9. Verfahren nach einem der Ansprüche 1 bis 8,
bei dem die Interferometrie-Radardaten mittels eines oder mehrerer Radarsatelliten, insbesondere einer Kombination aus den Radarsatelliten TerraSAR-X und TanDEM-X, oder mittels eines Luftfahrzeug-getragenen Radar-Interferometers aufgenommen werden.

10. Vorrichtung zur Ermittlung je einer Position und einer Fahrtrichtung für ein oder mehrere im Wasser fahrende Wasserfahrzeuge aus Interferometrie-Radardaten, in denen die Wasserfahrzeuge und die Wasserfahrzeuge umgebende Wasseroberflächen abgebildet sind, und zum Ausführen eines Verfahrens gemäß einem der Ansprüche 1 bis 9, umfassend:
a. ein Mittel (201) ausgebildet zum Bereitstellen der Radardaten als 2D-Interferogrammdaten INT1(x,y);
b. ein Mittel (204) ausgebildet zum Segmentieren der 2D-Interferogrammdaten INT1(x,y) zur Ermittlung von segmentierten 2D-Interferogrammdaten INT2(x,y), wobei die segmentierten 2D-Interferogrammdaten INT2(x,y) nur 2D-Datenbereiche Bₙ der 2D-Interferogrammdaten INT1(x,y) umfassen, die jeweils ein zusammenhängendes Streifenmuster, sogenanntes Fringe-Pattern, wiedergeben, mit n = 1, 2, ...;
c. ein Mittel (206) ausgebildet zum Ermitteln einer Kontur für jeden der 2D-Datenbereiche Bₙ;
d. ein Mittel (2086) ausgebildet zum Ermitteln eines Schwerpunktes für jeden der 2D-Datenbereiche Bₙ, wobei weiterhin für jeden der 2D-Datenbereiche Bₙ die Position eines Wasserfahrzeugs auf Basis des Schwerpunktes ermittelt wird;
e. ein Mittel (209) ausgebildet zum Ermitteln einer geometrischen Ausrichtung des in den Daten jedes 2D-Datenbereichs Bᵢ abgebildeten Streifenmusters relativ zu einer Bildachse der 2D-Interferogrammdaten INT1(x,y); und
f. ein Mittel (210) ausgebildet zum Ermitteln der Fahrtrichtung des jeweiligen Wasserfahrzeugs für jeden der 2D-Datenbereiche Bₙ abhängig von der ermittelten Ausrichtung des Streifenmusters und der ermittelten Form der Kontur des jeweiligen 2D-Datenbereichs Bₙ.

## Claims

1. A method for determining a position and a direction of travel in each case for one or more watercraft travelling in water from interferometry radar data, in which the watercraft and the water surface surrounding the watercraft are depicted, comprising the following steps:
a. providing (101) the radar data as 2D interferogram data INT1(x,y);
b. segmenting (104) the 2D interferogram data INT1(x,y) for determining segmented 2D interferogram data INT2(x,y), wherein the segmented 2D interferogram data INT2(x,y) only comprise those 2D data areas Bₙ of the 2D interferogram data INT1(x,y), which in each case reproduce a continuous fringe pattern, where n = 1, 2, ...;
c. determining (106) a contour for each of the 2D data areas Bₙ;
d. determining (108) a focus for each of the 2D data areas Bₙ, wherein furthermore, for each of the 2D data areas Bₙ, the position of a watercraft is determined on the basis of the focus;
e. determining (109) a geometric orientation of the fringe pattern depicted in the data of each 2D data area Bₙ; and
f. determining (110) the direction of travel of the respective watercraft for each of the 2D data areas Bₙ depending on the determined orientation of the fringe pattern and the determined contour of the respective 2D data area Bₙ.

2. The method according to Claim 1, in which the segmentation in step b. takes place by means of a pattern recognition algorithm, which detects the fringe pattern in the 2D interferogram data INT1(x,y).

3. The method according to Claim 1, in which the segmentation in step b. comprises the following steps:
g. determining (102) power spectra Lᵢ for each of a number N1 of first 2D data areas B1ᵢ in the 2D interferogram data INT1(x,y), where i = 1, ..., N1,
h. determining (103) a maximum amplitude Amaxᵢ of each determined power spectrum Lᵢ,
i. segmenting (104a) the 2D interferogram data INT1(x,y) for determining segmented 2D interferogram data INT2(x,y), wherein the segmented 2D interferogram data INT2(x,y) only comprise the 2D interferogram data INT1(x,y), which are assigned to first 2D data areas B1ₖ, for which the determined maximum amplitudes Amaxᵢ of the power spectra Lᵢ are in each case larger than a predetermined threshold value G1, where k = 1, ..., N2, and
j. determining (105) continuous 2D data areas Bₙ, where n = 1, 2, 3, ..., in the segmented 2D interferogram data INT2(x,y).

4. The method according to Claim 3,
in which the number N of the first 2D data areas B1ᵢ is equal to a total number of pixels of the 2D interferogram data INT1(x,y), so that for each pixel (xᵢ,yᵢ) of the 2D interferogram data INT1(x,y), a local power spectrum Lᵢ = L(xᵢ,yᵢ) is determined.

5. The method according to Claim 4,
in which the first 2D data areas B1ᵢ = B1(xᵢ,yᵢ) only comprise 2D interferogram data INT1(x,y), which comprise a predetermined proximity relationship to the respective reference pixel (xᵢ,yᵢ).

6. The method according to one of Claims 3 to 5,
in which the determination of the maximum amplitudes Amaxᵢ comprises a median filtering of the power spectra Lᵢ for creating filtered local power spectra Lᵢ', and the maximum amplitudes Amaxᵢ are determined in each case for a differential spectrum of local power spectrum Lᵢ and filtered local power spectrum Lᵢ'.

7. The method according to one of Claims 3 to 6,
in which the threshold value G1 is determined adaptively as a function of the determined maximum amplitudes Amaxᵢ, or in which the threshold value G1 is determined as a sum of average value and standard deviation of all maximum amplitudes Amaxᵢ.

8. The method according to one of Claims 3 to 7,
in which after step b., all 2D data areas Bₙ, the area size of which is smaller than a predetermined limit value G2, are excluded.

9. The method according to one of Claims 1 to 8,
in which the interferometry radar data are recorded by means of one or more radar satellites, particularly a combination of the radar satellites TerraSAR-X and TanDEM-X, or by means of an aircraft-carried radar interferometer.

10. A device for determining a position and a direction of travel in each case for one or more watercraft travelling in water from interferometry radar data, in which the watercraft and the water surface surrounding the watercraft are depicted, and for executing a method according to one of Claims 1 to 9, comprising:
a. a means (201) constructed for providing the radar data as 2D interferogram data INT1(x,y);
b. a means (204) constructed for segmenting the 2D interferogram data INT1(x,y) for determining segmented 2D interferogram data INT2(x,y), wherein the segmented 2D interferogram data INT2(x,y) only comprise 2D data areas Bₙ of the 2D interferogram data INT1(x,y), which in each case reproduce a continuous fringe pattern, where n = 1, 2, ... ;
c. a means (206) constructed for determining a contour for each of the 2D data areas Bₙ;
d. a means (2086) constructed for determining a focus for each of the 2D data areas Bₙ, wherein furthermore, for each of the 2D data areas Bₙ, the position of a watercraft is determined on the basis of the focus;
e. a means (209) constructed for determining a geometric orientation of the fringe pattern depicted in the data of each 2D data area Bᵢ relatively to an image axis of the 2D interferogram data INT1(x,y); and
f. a means (210) constructed for determining the direction of travel of the respective watercraft for each of the 2D data areas Bₙ depending on the determined orientation of the fringe pattern and the determined shape of the contour of the respective 2D data area Bₙ.

## Revendications

1. Procédé de détermination d'une position et d'une direction de navigation pour un ou plusieurs bateaux naviguant sur l'eau à partir de données radar interférométriques dans lesquelles les bateaux et les surfaces d'eau entourant les bateaux sont reproduits, comprenant les étapes suivantes :
a. fourniture (101) des données radar sous la forme de données interférométriques bidimensionnelles INT1(x,y),
b. segmentation (104) des données interférométriques bidimensionnelles INT1(x,y) pour déterminer des données interférométriques bidimensionnelles INT1(x,y) segmentées, sachant que les données interférométriques bidimensionnelles INT1(x,y) segmentées ne comprennent que des zones de données bidimensionnelles Bₙ de données interférométriques bidimensionnelles INT1(x,y), qui représentent respectivement un modèle à bandes cohérent, dit modèle à franges, avec n = 1,2,..,
c. détermination (106) d'un profil pour chacune des zones de données bidimensionnelles Bₙ,
d. détermination (108) d'un centre de gravité pour chacune des zones de données bidimensionnelles Bₙ, sachant par ailleurs que pour chacune des zones de données bidimensionnelles Bₙ, la position d'un bateau est déterminée sur la base du centre de gravité,
e. détermination (109) d'une orientation géométrique du modèle à bandes reproduit dans les données de chaque zone de données bidimensionnelles Bₙ, et
f. détermination (110) de la direction de navigation du bateau respectif pour chacune des zones de données bidimensionnelles Bₙ en fonction de l'orientation déterminée du modèle à bandes et du profil déterminé de la zone de données bidimensionnelles respective Bₙ.

2. Procédé selon la revendication 1 pour lequel la segmentation a lieu dans l'étape b. au moyen d'un algorithme d'identification de modèle, qui identifie les modèles à bandes dans les données interférométriques bidimensionnelles INT1(x,y).

3. Procédé selon la revendication 1 pour lequel la segmentation a lieu dans l'étape b., comprend les étapes suivantes :
g. détermination (102) de spectres de puissance Lᵢ pour chaque nombre N1 des premières zones de données bidimensionnelles B1ᵢ dans les données interférométriques bidimensionnelles INT1(x,y) avec i = 1,..., N1,
h. détermination (103) d'une amplitude maximale Amaxᵢ de chaque spectre de puissance déterminé Lᵢ,
i. segmentation (104a) des données interférométriques bidimensionnelles INT1(x,y) pour la détermination de données interférométriques bidimensionnelles segmentées INT2(x,y), sachant que les données interférométriques bidimensionnelles INT2(x,y) segmentées ne comprennent que les données interférométriques bidimensionnelles INT1(x,y), qui sont attribuées aux premières zones de données bidimensionnelles B1ₖ pour lesquelles les amplitudes maximales déterminées Amaxᵢ des spectres de puissance Lᵢ sont respectivement plus grandes qu'une valeur seuil G1 prédéfinie, avec k=1,...N2, et
j. détermination (105) des zones de données bidimensionnelles Bₙ cohérentes, avec n=1, 2, 3,..., dans les données interférométriques bidimensionnelles INT2(x,y) segmentées.

4. Procédé selon la revendication 3,
pour lequel le nombre N des premières zones de données bidimensionnelles B1ᵢ est égal à un nombre total de pixels des données interférométriques bidimensionnelles INT1(x,y) de telle manière que pour chaque pixel (xᵢ,yᵢ) des données interférométriques bidimensionnelles INT1(x,y) un spectre de puissance local Lᵢ=L(xᵢyᵢ) est déterminé.

5. Procédé selon la revendication 4,
pour lequel les premières zones de données bidimensionnelles B1ᵢ = B1(xᵢyᵢ), ne comprennent des données interférométriques bidimensionnelles INT1-x,y), qui comprennent un rapport de voisinage prédéfini par rapport au pixel de référence respectif (xᵢyᵢ).

6. Procédé selon l'une quelconque des revendications 3 à 5,
pour lequel la détermination des amplitudes maximales Amaxᵢ comprend un filtrage médian des spectres de puissance Lᵢ' pour la production de spectres de puissance locaux filtrés Lᵢ' et les amplitudes maximales Amaxᵢ sont respectivement déterminées pour un spectre différentiel du spectre de puissance local Lᵢ et du spectre de puissance local filtré Lᵢ'.

7. Procédé selon l'une quelconque des revendications 3 à 6,
pour lequel la valeur seuil G1 est déterminée de façon adaptative en fonction des amplitudes maximales déterminées Amaxᵢ ou pour lequel la valeur seuil G1 est déterminée en tant que somme de la valeur moyenne et de l'écart standard de toutes les amplitudes maximales Amaxᵢ.

8. Procédé selon l'une quelconque des revendications 3 à 7,
pour lequel après l'étape b. toutes les zones de données bidimensionnelles Bₙ dont la taille de zone est plus faible que la valeur limite prédéfinie G2, sont écartées.

9. Procédé selon l'une quelconque des revendications 1 à 8,
pour lequel les données radar interférométriques sont enregistrées au moyen d'un ou plusieurs satellites radars, notamment d'une combinaison des satellites radars TerraSAR-X et TanDEM-X ou au moyen d'un interféromètre radar aéroporté.

10. Dispositif de détermination d'une position et d'une direction de navigation d'un ou plusieurs bateaux naviguant sur l'eau à partir de données radar interférométriques dans lesquelles les bateaux et les surfaces d'eau entourant les bateaux sont reproduits et pour exécuter un procédé selon l'une quelconque des revendications 1 à 9, comprenant :
a. un moyen (201) constitué pour fournir des données radar sous la forme de données interférométriques bidimensionnelles INT1(x,y),
b. un moyen (204) constitué pour segmenter les données interférométriques bidimensionnelles INT1(x,y) pour déterminer des données interférométriques bidimensionnelles INT1(x,y) segmentées, sachant que les données interférométriques bidimensionnelles INT1(x,y) segmentées ne comprennent que des zones de données bidimensionnelles Bₙ de données interférométriques bidimensionnelles INT1(x,y), qui représentent respectivement un modèle à bandes cohérent, dit modèle à franges,, avec n = 1,2,..,
c. un moyen (206) constitué pour déterminer un profil pour chacune des zones de données bidimensionnelles Bₙ,
d. un moyen (2086) constitué pour déterminer un centre de gravité pour chacune des zones de données bidimensionnelles Bₙ, sachant par ailleurs que pour chacune des zones de données bidimensionnelles Bₙ, la position d'un bateau est déterminée sur la base du centre de gravité,
e. un moyen (209) constitué pour déterminer une orientation géométrique du modèle à bandes reproduit dans les données de chaque zone de données bidimensionnelles Bᵢ par rapport à un axe d'image des données interférométriques bidimensionnelles INT1(x,y), et
f. un moyen (210) constitué pour déterminer la direction de navigation du bateau respectif pour chacune des zones de données bidimensionnelles Bₙ en fonction de l'orientation déterminée du modèle à bandes et de la forme déterminée du profil de la zone de données bidimensionnelles Bₙ respective.
